# EUROPEAN PATENT SPECIFICATION

(11) **EP 4 500 827 B1**
(45) Date of publication and mention of the grant of the patent: **04.11.2026**
(21) Application number: 23727740.5
(22) Date of filing: 03.05.2023
(51) Int. Cl.: H04L 65/1016, H04L 65/1069, H04L 65/1095, H04L 65/1104, H04L 69/28

(54) **SIP TIMER MODIFICATION TO SUPPORT IMS CALL FALLBACK**
SIP-TIMER-MODIFIKATION ZUR UNTERSTÜTZUNG VON IMS-ANRUFRÜCKFALL
MODIFICATION DE TEMPORISATEUR SIP POUR PRENDRE EN CHARGE UNE REPRISE D'APPEL IMS

(30) Priority: 03.06.2022 US 202263348806 P
(43) Date of publication of application: 05.02.2025
(73) Proprietor: Google LLC, Mountain View, CA 94043 (US)
(72) Inventor: CHUNG, Chi-Wen, Taipei, 110 (TW); CHUEH, Han-Jung, Taipei, 110 (TW)
(74) Representative: Thorniley, Peter
(86) International application number: PCT/US2023/020774
(87) International publication number: WO 2023/235095

(56) References cited:
- WO-A1-2022/039496
- US-B2- 10 244 574

## Description

### BACKGROUND

Certain cellular telephony standards provide for a "fallback" process in which a user equipment (UE) can attempt to establish an Internet Protocol Multimedia Subsystem (IMS) call (or other packet-switched call) via a first, typically more advanced, radio access technology (RAT), and if the IMS call attempt fails, the UE can "fall back" to a second, typically less advanced, RAT. For example, the Third Generation Partnership Project (3GPP) Fifth Generation New Radio (5G NR) set of standards provides for an Evolved Packet System (EPS) Fall Back (EPSFB) process to facilitate UE connectivity even when a 5G NR may not be fully provisioned for voice calls. The EPSFB process can be implemented in two ways. In a first approach, an inter-RAT handover occurs after the call is initiated, and thus while a call is initiated via a 5G NR RAT, the call ultimately is conducted via a 3GPP Fourth Generation Long Term Evolution (4G LTE) RAT. In a second approach, the network issues a "Release with Redirect" message that triggers the UE to release the 5G NR radio connection entirely and to reattempt the call using a new radio connection to a 4G LTE cell. The 3GPP 4G LTE set of standards likewise has an analogous Circuit Switched Fall Back (CSFB) procedure for fallback from a 4G LTE RAT to a Third Generation (3G) RAT or even a Second Generation (2G) RAT.

International patent application WO 2022/039496 describes a method for reducing call setup time in a 5G UE: the method includes initiating a Voice over New Radio (VoNR) call on a 5G cell, detecting an inability of the UE to support the VoNR call on the 5G cell and initiating a procedure to fall back to a 4G cell. United States Patent 10,244,572 describes direct Device-to-Device communication in which the communication control method comprises a step of transmitting, by a first user terminal in a cell coverage, to another user terminal, identification information for identifying that the first user terminal is located in a cell.

### BRIEF DESCRIPTION OF THE DRAWINGS

The present disclosure is better understood, and its numerous features and advantages made apparent to those skilled in the art, by referencing the following examples. The use of the same reference symbols in different drawings indicates similar or identical items.
FIG. 1 is a block diagram of a cellular telephony system employing conditional SIP timer restart for a fallback process at call setup in accordance with some embodiments.
FIG. 2 is a block diagram of a UE of the system of FIG. 1 in accordance with some embodiments.
FIG. 3 is a combination flow-and-ladder diagram illustrating a SIP timer restart process for a scenario in which a Release with Redirect message is received as part of a fallback process in accordance with some embodiments.
FIG. 4 is a combination flow-and-ladder diagram illustrating a SIP timer modification process for a scenario in which a Release with Redirect message is not received as part of a fallback process in accordance with some embodiments.
FIG. 5 is a combination-flow-and-ladder diagram illustrating a SIP timer modification process for a scenario in which a Release with Redirect message is not received and a preferred RAT connection is not available in accordance with some embodiments.
FIG. 6 is a combination flow-and-ladder diagram illustrating a SIP timer modification process for a scenario in which a Quality of Service (QoS) timer expiry is present in accordance with some embodiments.

### DETAILED DESCRIPTION

When a UE initiates a packet-switched call (e.g., an IMS call) via a corresponding RAT, a sequence of Session Initiation Protocol (SIP) messages is exchanged between the UE and the network to set up and then maintain the packet-switched call. The initial SIP message transmitted in this sequence typically is a SIP INVITE message, the transmission of which triggers the UE to start a plurality of SIP timers. These SIP timers are used to specify various waiting periods for corresponding actions from the network, and upon receipt of a particular message or other signaling from the network, the corresponding SIP timer is stopped or canceled. If a SIP timer expires before being stopped or canceled, the timer expiry triggers one or more corresponding actions from the UE that can impact the connectivity of the UE. For example, the SIP RequestTimeout timer specifies the maximum time the UE should wait for any response from the network following transmission of the SIP INVITE message. Expiry of the SIP RequestTimeout timer indicates that the network has failed to respond within the specified duration, and this typically triggers the UE to terminate the call setup and, in some instances, attempt a silent redial of the call over an alternative RAT. Other SIP timers are tied to other messages and may also trigger the UE to terminate call setup or otherwise influence the behavior of the UE during call setup.

While the use of SIP timers generally is useful in ensuring the UE does not spend excessive time attempting to set up a call that cannot ultimately be set up, in some instances the standardized duration of a SIP timer may be impracticable for certain cellular fallback scenarios. For example, a Radio Resource Control (RRC) Release with Redirect message may not be received in time but certain networks may continue to transmit SIP messages even in the absence of the RRC Release with Redirect message, which may induce the UE to continue to attempt to use the original, or source, RAT initially used to attempt the call, rather than to fall back to an alternative RAT. As another example, the default duration of the SIP RequestTimeout timer often is insufficient to allow the UE to complete an LTE silent retry, which then may force the UE to turn to CSFB due to the perceived EPSFB "failure." As yet another example, after EPSFB has completed, a Voice over LTE (VoLTE) call may be terminated immediately due to one or more other SIP timer expiries resulting from failure to set up a dedicated bearer in time. However, it is typically inadvisable to disregard the default SIP timer durations as specified by the corresponding cellular standards by simply implementing a longer timer duration by default. Doing so would impact all such IMS calls that utilize the corresponding SIP timer, including emergency calls. For example, setting a longer SIP timer for all situations could result in a longer duration passing before a call retry is performed, or if the network does not send any audio packets in the extended portion of the timer, the silent phone time would be extended, which could make the user doubt whether the call was proceeding.

Accordingly, disclosed herein are systems and techniques for facilitating EPSFB and other similar fallback processes by selectively restarting SIP timers in response to one or more specified conditions and adding a general or timer-specific offset to the restarted SIP timers so as to provide additional time to complete various subprocesses related to the fallback process, depending on the scenario. For example, in one scenario, after the condition of receipt of an RRC Release with Redirect message at a UE following an attempt by the UE to initiate a Voice over 5G NR (VoNR) call is met, the UE may restart some or all SIP timers initiated by the transmission of the SIP INVITE message and add the same or a different offset to each restarted timer so as to provide the UE sufficient time to complete the Target Area Update (TAU) process that typically is implemented as part of the EPSFB process following a Release with Redirect message. As another example, after a condition of expiry of a Quality of Service (QoS) reservation timer started in response to a SIP Session Progress with Session Description Protocol (SDP) message is met, the UE may restart the QoS reservation timer and add an offset (along with restarting other SIP timers with respective offsets) to likewise provide sufficient time for the TAU process to complete. These example scenarios and other scenarios involving the selective restart of one or more SIP timers to facilitate effective fallback processes are described in detail below.

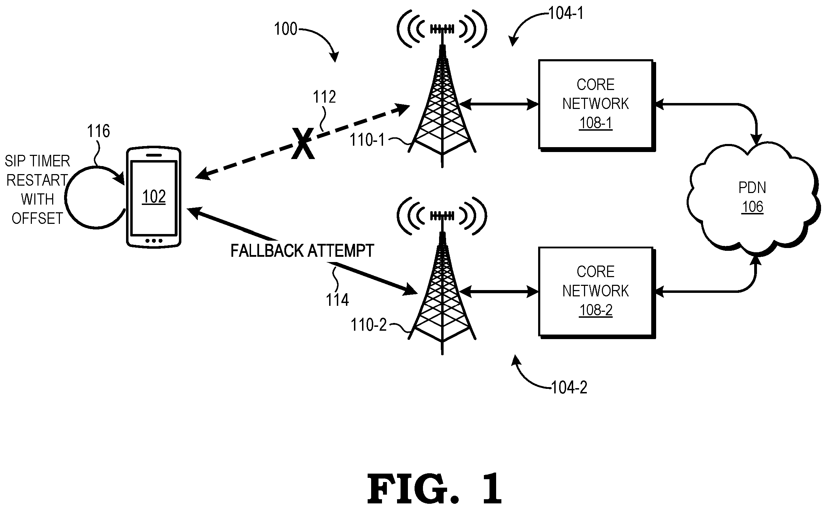

FIG. 1 illustrates a cellular communications system 100 employing selective SIP timer restart during call initiation fallback in accordance with some embodiments. As shown, the system 100 includes a user equipment (UE) 102 and one or more cellular infrastructure networks 104, such as the two illustrated cellular infrastructure networks 104-1 and 104-2. The UE 102 can include any of a variety of electronic wireless communication devices, such as a cellular phone, a cellular-enabled tablet computer or cellular-enabled notebook computer, a cellular-enabled watch or other wearable device, an automobile or other vehicle employing cellular services (e.g., for navigation, provision of entertainment services, in-vehicle mobile hotspots, etc.), a cellular access point (or "hot spot), and the like. Each cellular infrastructure network 104 is connected to one or more other cellular infrastructure networks 104 via at least one packet data network (PDN) 106, such as the Internet, via one or more private interconnecting data networks, or a combination thereof.

Each cellular infrastructure network 104 includes a core network 108 and a plurality of edge networks, or radio access networks (RANs), connected via a backhaul infrastructure. Although cellular infrastructure networks 106-1 and 106-2 are illustrated as having different core networks 108 (e.g., core networks 108-1 and 108-2, respectively), in other embodiments multiple cellular infrastructure networks 104 share the same core network 108 and differ instead by the edge network connected to the shared core network 108. Each edge network includes at least one base station (BS) 110, such as base stations 110-1 and 110-2, operable to wirelessly communicate with UEs within signal range based on one or more radio access technologies (RATs). Examples of the base station 110 include, for example, a NodeB (or base transceiver station (BTS)) for a Universal Mobile Telecommunications System (UMTS) RAT implementation (also known as "3G"), an enhanced NodeB (eNodeB) for a Third Generation Partnership Project (3GPP) Long Term Evolution (LTE) RAT implementation, a 5G Node B (gNB) for a 3GPP Fifth Generation New Radio (5G NR) RAT implementation, and the like. As is well known in the art, the base stations 110 operate as an "air interface" to establish radio frequency (RF) wireless connections with UEs, and these wireless connections (or "links") then serve as data and voice paths between the UEs and the core networks 108 for providing various services to the UEs, including voice services via circuit-switched networks or packet-switched networks, messaging services such as simple messaging service (SMS) or multimedia messaging service (MMS), multimedia content delivery, presence services, and the like. For ease of illustration, the base station 110-1 is described in various scenarios below as a 5G NR radio access network (RAN), and thus is an eNodeB in such scenarios, while the base station 101-2 is described in various scenarios as a 4G LTE RAN, and thus is a gNB in such scenarios. However, it will be appreciated that the base stations 110-1 and 110-2 are not limited to these example configurations. For example, the base station 101-1 could be a 4G LTE RAN (e.g., a gNB) and the base station 101-2 could be a 3G RAN (e.g., a NodeB), or *vice versa.*

Although battery power, signal quality, and other factors may ultimately result in a different prioritization, everything being equal the UE 102 generally seeks to establish a call with the most advanced RAN that can be supported by the UE 102. Accordingly, assuming the base station 110-1 represents a more advanced RAN than the base station 110-2 (e.g., a 5G NR RAN vs a 4G LTE RAN), the UE 102 will attempt to camp on a cell supported by the base station 110-1. When a user attempts to initiate a packet-switched call (IMS call), such as a VoNR voice or video call, the UE 102 attempts to set up a packet-switched call 112 with the cellular infrastructure network 104-1. However, one or both of the UE 102 or the cellular infrastructure network 104-1 may not have the capacity to set up and conduct a packet-switched call between the UE 102 and the cellular infrastructure network 104-1. For example, the UE 102 may generally support 5G NR RAT functionality, but may not be configured to implement VoNR via a 5G NR connection. As another example, the cellular infrastructure network 104-1 may be configured to prohibit support for VoNR for the UE 102 or the cellular infrastructure network 104-1 may be, for example, a 5G NR non-stand-alone (NSA) deployment, whereas the UE 102 can support VoNR only via 5G NR stand-alone (SA) deployments. In any event, the UE 102 may attempt to set up the packet-switched call with the cellular infrastructure network 104-1 and at some point the need to fall back to a different RAT is recognized by one or both of the UE 102 and the cellular infrastructure network 104-1. Accordingly, a fallback process, such as EPSFB in the case that the cellular infrastructure network 104-1 is a 5G NR RAN or CSFB in the case that the cellular infrastructure network 104-1 is a 4G LTE RAN, is initiated so that the call setup is redirected to another RAN, such as the base station 110-2 of the cellular infrastructure network 104-2.

However, the initial attempt at call set up triggers the UE 102 to start a plurality of SIP timers pertaining to the call set up or maintenance of the call. These SIP timers continue to run (count down) until either expiry of the corresponding SIP timer or a corresponding condition (typically receipt of a particular message from the network). More specifically, some or all of these SIP timers continue to run during a fallback attempt 114. However, the fallback attempt 114 can take a relatively long time as it can involve one or more lengthy sub-processes, such as an LTE silent call retry or the process of attempting to set up a dedicated bearer for quality of service (QoS) purposes. As such, there is a significant risk that a SIP timer that triggers the UE 102 to terminate the call attempt, or that otherwise triggers UE behavior that negatively impacts the fallback attempt 114, will undesirably expire while the initiated fallback process is still progressing, which in turn can cause premature termination of the call attempt.

Accordingly, in at least one embodiment, the UE 102 employs a selective SIP timer restart process 116 in which, responsive to certain conditions pertaining to the fallback attempt 114 being met, the UE 102 selectively restarts a set of the SIP timers and, in some embodiments, adds an offset to some or all of the restarted SIP timers, where the added offset may be the same or different for different restarted SIP timers. By restarting the impacted SIP timer(s) and adding a corresponding offset in response to specific scenarios rather than a de facto default extension of the SIP timers in general, the UE 102 can provide for more time for the fallback attempt 114 to complete and succeed before the expiry of a SIP timer triggers the UE 102 to terminate the call attempt entirely or otherwise take actions that negatively impact the fallback attempt 114, while also maintaining the original SIP timer durations for other packet-switched calls, such as emergency calls or IMS calls using certain RATs, such as Voice over WiFi (VoWiFi) calls that utilize a wireless local area network (WLAN) RAT.

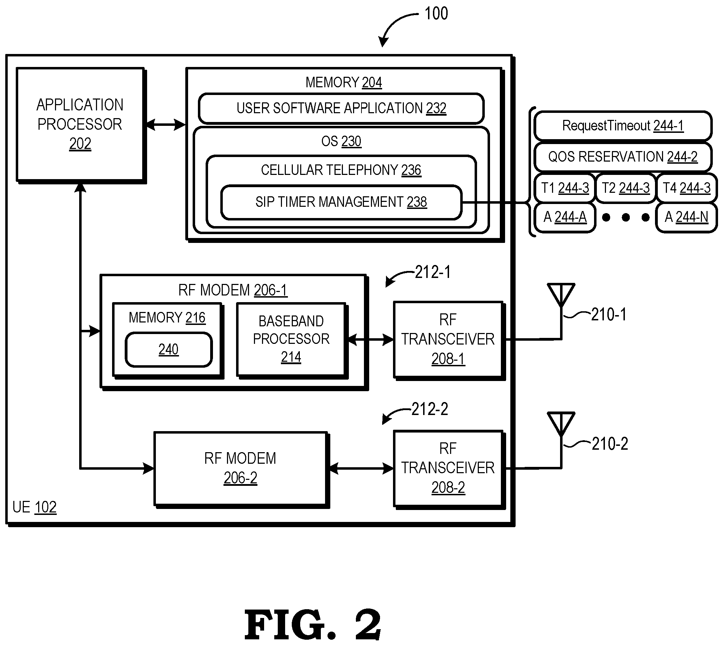

FIG. 2 illustrates an example hardware implementation 200 of the UE 102 in accordance with some embodiments. In the depicted example, the UE 102 includes at least one application processor 202 (e.g., a central processing unit (CPU) or other general processor), a system memory 204, one or more RF modems 206, one or more RF transceivers 208, and one or more antenna arrays 210 suitable for RF signaling and signal processing in one or more frequency bands typically associated with the corresponding RAT (e.g., a 5G NR RAT). Each RF modem 206, RF transceiver 208, and antenna array 210 triplet together support a corresponding RAT 212. In the illustrated embodiment, the UE 102 supports two RATs 212, namely RAT 212-1 (implemented by RF modem 206-1, RF transceiver 208-1, and antenna array 210-1) and RAT 212-2 (implemented by RF modem 206-2, RF transceiver 208-2, and antenna array 210-2). Note that in other embodiments, the UE 102 may support more than two RATs 212. Further, multiple RATs 212 of the UE 102 may implement overlapping hardware. For example, two RATs 212 may share one or more an RF modem 206, a RF transceiver 208, or an antenna array 210. As illustrated using RF modem 206-1, each RF modem 206 includes a baseband processor 214 and a memory 216, which can include, for example, a Flash memory, non-volatile random access memory (NVRAM) or other non-volatile memory, or static RAM (SRAM) or dynamic RAM (DRAM) or other volatile memory, or a combination thereof. Further, it will be appreciated that the UE 102 can include a number of additional components omitted from FIG. 2 for ease of illustration including, for example, one or more displays, one or more touchscreens, keypads, mice, touchpads, microphones, speakers, and other user input/output devices, one or more sensors, batteries or other power sources, graphical processing units (GPUs) or other coprocessors, and the like.

The application processor 202 executes executable instructions from a software stack that includes an operating system (OS) 230 and one or more user software applications, such as user software application 232, and which further can include protocol stacks executed by the baseband processor 214 of the RF modem(s) 206. The OS 230, through manipulation of the application processor 202, manages the general operation of the various hardware components of the UE 102 as well as supports the execution of the one or more user software applications, with the executable instructions representing the OS 230 and the user software application typically accessed from system memory 204 for execution by the application processor 202. The modules of the OS 230 thus include a cellular telephony module 236 for controlling or facilitating the higher-level cellular-related operations of the UE 102, including subscriber identity management, initiation, control, and tear-down of cellular connections (including SIP messaging and RRC messaging), authentication, interfacing between cellular connections and the user software applications, and the like. Further, the memory 216 of the RF modem 206 stores one or more protocol stacks 240 for a corresponding cellular standard. Each protocol stack 240 stores executable instructions that, when executed by the baseband processor 214, manipulate the baseband processor 214 to perform various operations in accordance with a RAT protocol or other communication protocol associated with the air interface provided by the base station 110 (FIG. 1) of the cellular infrastructure network 104 for which the UE 102 is attempting to establish a communication link. As is well known, such operations typically are associated with the lower-level layers of a network protocol, such as some or all of the physical, data link, and network layers, while the OS 230 and the user software applications support the higher-level layers of the network protocol, such as the transport, session, presentation, and application layers.

In at least one embodiment, the cellular telephony module 236 includes a SIP timer management module 238 configured to manage a set 242 of SIP timers utilized by the cellular telephony module 236. This set 242 includes SIP timers 244 that are associated with call setup and call maintenance and which have the potential to impact a call attempt undergoing a fallback process. Such timers may include, for example, the RequestTimeout timer (SIP timer 244-1), the QoS Reservation timer (SIP timer) 244-2, the T1, T2, and T4 timers (SIP timers 244-3, 244-4, and 245-5, respectively), and timers A-N (SIP timers 244-A through 244-N, respectively) identified in 3GPP Technical Specification (TS) 24.229 and various corresponding 3GPP Requests for Comments (RFCs). As will be understood by a skilled artisan, these SIP timers can have a negative impact on a fallback attempt due to the duration of the fallback attempt (or corresponding sub-process) relative to the default duration of the timer (e.g., as specified in 3GPP TS 24.299 or other similar specification). For example, the SIP RequestTimeout timer 244-1 is specified to be set to between 5 and 15 seconds, is started by the SIP timer management module 238 when the UE 102 transmits a SIP INVITE message and is stopped by the SIP timer management module 238 when the UE 102 receives any SIP message in response. In response to its expiry, a UE is supposed to terminate call set up and, if an alternative RAT is available, attempt a silent redial for the call over the alternative RAT. As another example, the SIP QoS Reservation timer 244-2 is set to a duration of 6 seconds, is started by the SIP timer management module 238 when the UE 102 receives a SIP 183 with SDP message (that is, a SIP 183 message with SDP indicating that a precondition is required; namely, a dedicated QoS bearer for media is available), and is stopped by the SIP timer management module 238 when the dedicated bearer setup is complete and the QoS precondition is met. In response to its expiry, a UE is intended to send a SIP 580 Preconditions Failure message or SIP CANCEL message, which terminates the call. As yet another example, the SIP B timer 244-B is set to a duration of 128 seconds, is started by the SIP timer management module 238 when the UE 102 transmits a SIP INVITE message and is stopped by the SIP timer management module 238 when the UE 102 receives a final SIP message (SIP 2xx, 3xx, 4xx, 5xx, or 6xx message) in response to the SIP INVITE message. In response to its expiry, a UE is intended to mark the currently used Proxy Call Session Control Function (P-CSCF) address as unavailable and then try a next P-CSCF and initiate registration. For ease of reference, Table 7.7.1 of the 3GPP TS 24.229 version 12.9.0 Release 12 standard, describes a number of the SIP timers that may be managed by the SIP timer management module 238 and which being set to the default duration could negatively impact a EPSFB or other fallback process, is reproduced below:

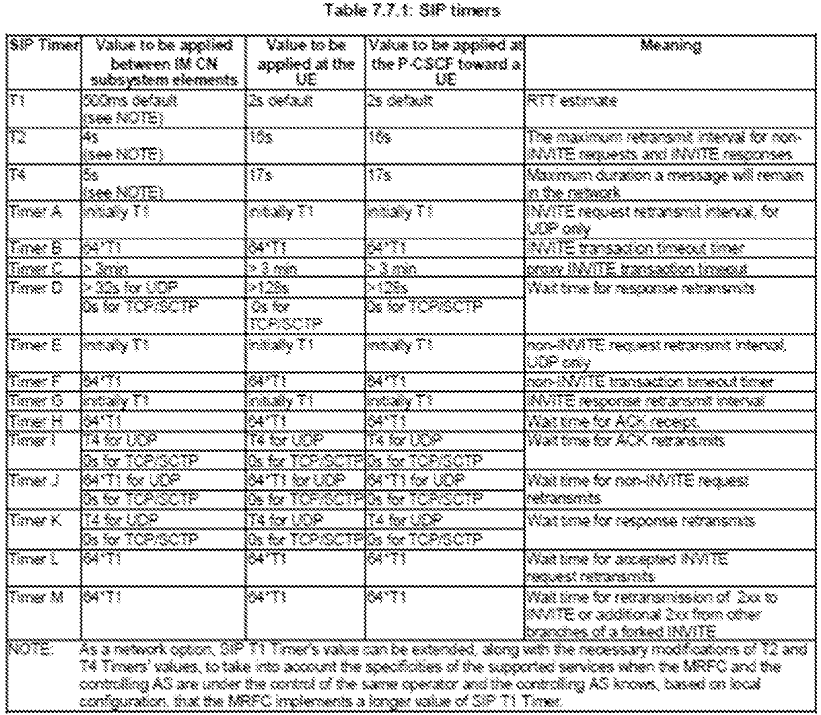

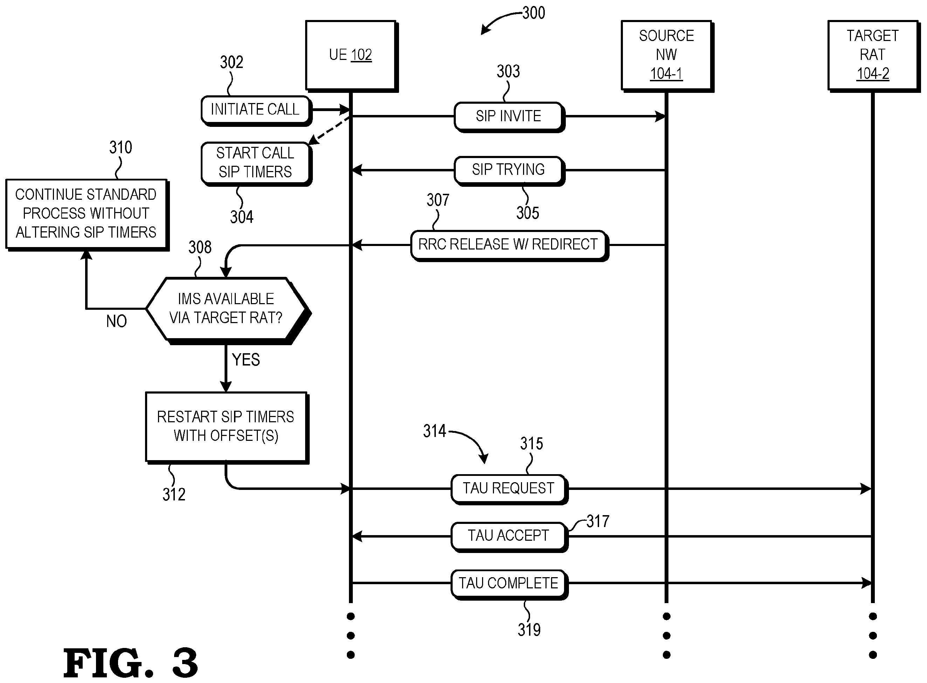

FIGs. 3-6 illustrate various example scenarios in which the SIP timer management module 238 selectively restarts SIP timers (with or without an additional offset) to configure the UE 102 to provide additional time for the accommodation of the various sub-processes to be performed as part of a call fallback attempt. Although four such scenarios are illustrated by way of example, the general approach of selective SIP timer restart for a fallback attempt responsive to one or more specified conditions being met in association with a fallback process is not limited to these particular scenarios, but instead may be implemented in any of a variety of similar scenarios utilizing the guidelines and examples provided herein. In these four example scenarios, the cellular infrastructure network 104-1 is a 5G NR RAN and thus is the "source" network (or "source" RAT) and the cellular infrastructure network 104-2 is a 4G LTE network that is the "target" network (or "target" RAT) for fallback purposes. Further for these examples, either the UE 102 is not configured to support IMS calls over 5G NR or the source network 104-1 is not configured to support an IMS call over 5G NR for the UE 102, and thus some form of EPSFB (or other fallback) is attempted after a call initiation attempt with the source network 104-1.

FIG. 3 illustrates a combined method-and-ladder diagram 300 illustrating an operation of the UE 102 in a scenario in which an EPSFB attempt is triggered in response to successful receipt of an RRC Release with Redirect message from a 5G NR source network 104-1. At block 302, a user of the UE 102 initiates an IMS call via 5G NR, which triggers the UE 102 to transmit a SIP INVITE message 303 to the source network 104-1. In response to the transmission of the SIP INVITE message 303, the SIP timer management module 238 starts the appropriate SIP timers 244 at block 304.

As the source network 104-1 is not configured to support an IMS call over 5G NR (e.g., VoNR) for the UE 102 in this scenario, the source network 104-1 is unable to respond with a SIP RINGING message to indicate that the destination user proxy has received the SIP INVITE message 303. So the source network 104-1 instead responds to the SIP INVITE message 303 with a SIP TRYING message 305 to indicate an extended search is being performed, which may take considerable time. In response to this SIP TRYING message 305, the SIP timer management module 238 stops the appropriate SIP timers, such as the SIP RequestTimeout timer 244-1 and SIP B timer 244-B.

Further, the source network 104-1 recognizes that the IMS call cannot be completed over 5G NR, and thus initiates an EPSFB process by transmitting an RRC Release with Redirect message 307 to direct the UE 102 to fallback to a 4G LTE RAT. Thus, in response to the RRC Release with Redirect message 307, at block 308 the UE 102 determines whether an IMS call (or other packet-switched call) can be supported via the target RAT (that is, via a 4G LTE RAT supported by the target network 104-2). If an IMS call is not available as such, then at block 310 the UE 102 refrains from altering any running SIP timers 244 and continues to manage the fallback process according to a default, or standardized, process. In this particular instance, because the fallback attempt will not work because an IMS call via the "fallback" network is not available, subsequent expiry of one or more of the running SIP timers will result in the UE 102 terminating the call attempt.

Returning to block 308, if the UE 102 determines that an IMS call is available (supported) by the target network 104-2, then at block 312 the SIP timer management module 238 prepares for the EPSFB attempt by restarting those running SIP timers 244 that may impact the EPSFB attempt in response to the condition of receipt of the RRC Release with Redirect message 307 being met and the condition of a packet-switched call (that is, an IMS call) being supportable by the target network 104-2 being met. This may include, for example, the SIP timer management module 238 restarting some or all of SIP RequestTimeout timer 244-1, SIP QoS Reservation timer 244-2, SIP T1, T2, and T4 timers (timers 244-3 to 244-6), SIP Timers A-N (timers 244-A to 244-N), etc. Further, in recognition of the likely extended duration required to successfully complete the subprocesses of the EPSFB attempt, in some embodiments the SIP timer management module 238 may add an additional offset to the default duration of the corresponding restarted SIP timer. This offset may be the same value for each restarted timer. For example, the offset may be specified as 10 seconds, so SIP RequestTimeout timer 244-1, with a default duration of, say, 15 seconds, would be restarted with a starting duration of the sum of the default duration and the offset to be applied, or 25 seconds, while the SIP QoS Reservation timer 244-2, with a default duration of 6 seconds, would be restarted with a starting duration of 16 seconds. In other embodiments, different offsets may be applied to different restarted SIP timers. For example, the offset applied to each restarted SIP timer may be proportional to its default duration (e.g., a 150% offset). In other embodiments, the particular offset applied to each restarted SIP timer, or the standard offset applied to every restarted SIP timer, may be selected based on analysis, estimation, simulation, or a combination thereof.

With the SIP timers 244 restarted (and, in some embodiments, expanded from their default durations through the introduction of an offset), the UE 102 performs one or more sub-processes of the EPSFB attempt. One such sub-process that is relatively long and thus subject to causing expiry of SIP timers that have not been restarted in accordance with the techniques described herein is the Tracking Area Update (TAU) process that typically is performed during a handover or fallback process. As will be appreciated, from the perspective of the target network 104-2 the UE 102 is effectively "idle" at the start of the EPSFB process, and thus the target network 104-2 needs to determine the location of the UE 102 on a cell-level, rather than tracking area (TA) level. Thus, as part of the EPSFB process and following (or concurrent with) the restart of the SIP timer(s) at block 312, the UE 102 and the target network 104-2 conduct a TAU process 314 so that the target network 104-2 can identify the "cell" location of the UE 102. As known in the art, this process typically includes the transmission of a TAU request message 315 that includes various information regarding the UE 102, such as core network capabilities, last-visited Tracking Area Identifier (TAI), EPS bearer status, and the like. In response, and assuming the Mobility Management Entity (MME) of the target network 104-2 accepts the UE's request, the target network 104-2 responds with a TAU accept message 317 that, among other items, notifies that the MME has allocated a new Globally Unique Temporary UE Identity (GUTI) for the UE 102. In response to the TAU accept message 317, the UE 102 transmits a TAU complete message 319 to acknowledge receipt and signal that the TAU process has completed.

In the illustrated scenario, the TAU process 314 is completed, as are the other sub-processes of the EPSFB attempt, before any of the restarted-and-extended SIP timers expire, thereby allowing the UE 102 sufficient time to complete the EPSFB process without premature call termination due to expiry of an original SIP timer of a default duration that doesn't fully account for the relatively long duration that may be required for successful fallback after a failed attempt to initiate a call using a RAT that is unavailable to support the packet-switched call.

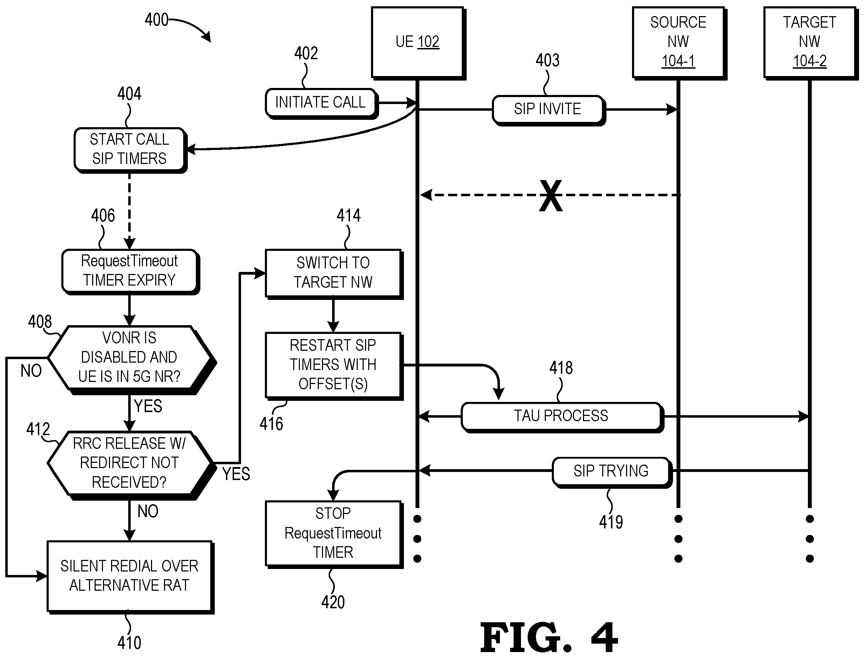

FIG. 4 illustrates a combined method-and-ladder diagram 400 illustrating an operation of the UE 102 in a scenario in which an EPSFB attempt is triggered in response to the failure to receive an RRC Release with Redirect message from a 5G NR source network 104-1. At block 402, a user of the UE 102 initiates an IMS call via 5G NR, which triggers the UE 102 to transmit a SIP INVITE message 403 to the source network 104-1. In response to the transmission of the SIP INVITE message 403, the SIP timer management module 238 starts the appropriate SIP timers 244 at block 404.

In this scenario, the source network 104-1 does not respond with any SIP message nor with an RRC Release with Redirect message. As such, the SIP RequestTimeout timer 244-1 eventually will expire (block 406) due to the lack of received response. However, unlike a conventional approach in which expiry of this timer automatically triggers call termination and, in some approaches, a modem redial with a different RAT, in at least one embodiment the UE 102 instead implements a fallback attempt using restarted (and expanded) SIP timers. Accordingly, at block 408, the UE determines whether VoNR (that is, IMS calling via 5G NR) is disabled or otherwise unavailable to support a packet-switched call via the UE 102 (e.g., as a result of a software setting or configuration at the UE 102) and the US 102 currently is using the 5G NR RAT (e.g., RAT 212-1, FIG. 2). If either of these conditions is false (or "no"), then a UE-initiated fallback attempt is not advisable, and thus the UE 104 defaults to a conventional approach in which the UE 102 attempts a silent redial of the user-initiated call over an alternative RAT (e.g., a 4G LTE RAT) at block 410.

However, if both conditions are true (or "yes"), then at block 412 the UE 102 confirms that an RRC Release with Redirect message has not been received. If such a message has in fact been received but the SIP RequestTimeout timer 244-1 has expired, then an EPSFB attempt is not advisable and thus the UE 102 defaults to the conventional approach of silent redialing of the call via the alternative RAT at block 410. Otherwise, if the condition that an RRC Release with Redirect message has not been received is met, then the UE 102 proceeds with a fallback attempt by attempting to camp on the target network 104-2 with IMS. Accordingly, at block 414 the UE 102 switches from the source RAT to the target RAT (e.g., switches from using RAT 212-1 to using RAT 212-2) and at block 416 the UE 102 restarts some or all of the running (or expired) SIP timers, and in some embodiments adds the same or different offset to some or all of the restarted SIP timers. This SIP timer restart (with additional offset) prepares the UE 102 to initiate performance of the sub-processes of the EFSFB process without premature termination by expiry of a SIP timer originally started with the issuance of the SIP INVITE message 403. For example, the UE 102 and target network 104-2 participate in a TAU process 418, which in the illustrated embodiments is successfully completed. Further, following completion of the TAU process 418, the target network 104-2 signals that it is attempting to complete the call by transmitting a SIP TRYING message 419, which triggers the SIP timer management module 238 to stop the SIP RequestTimeout timer 244-1 that was restarted at block 416. The process for attempting to complete the IMS call using the target network 104-2 then may proceed using the standardized process with the remaining restarted and still running SIP timers to control the behavior of the UE 102 in response to corresponding conditions as this process progresses.

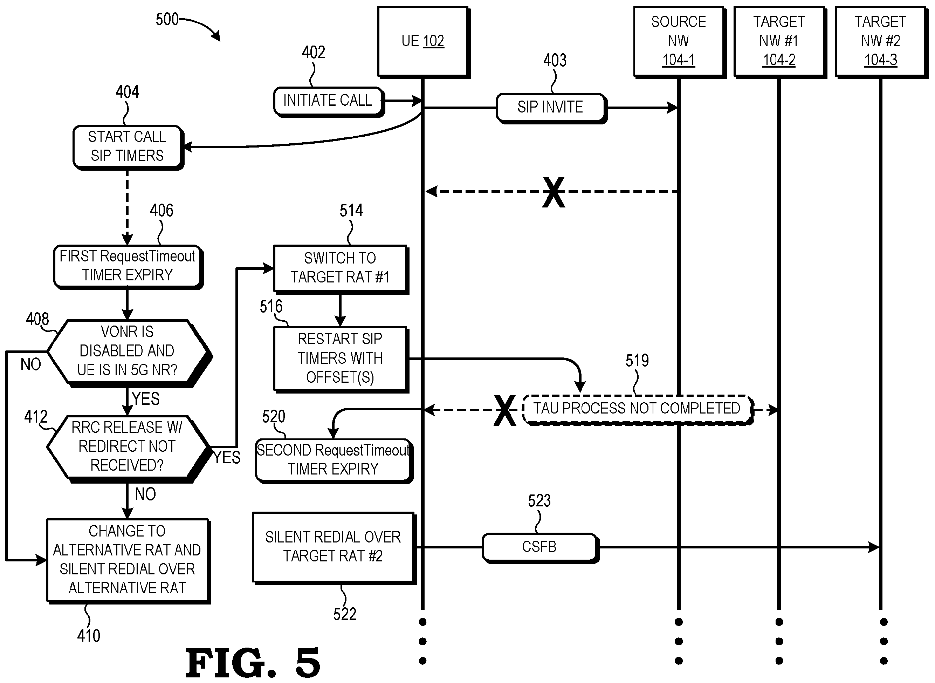

FIG. 5 illustrates a combined method-and-ladder diagram 500 illustrating an operation of the UE 102 in a scenario similar to the scenario of FIG. 4 in which an EPSFB attempt is triggered in response to the failure to receive an RRC Release with Redirect message from a 5G NR source network 104-1. However, the scenario of FIG. 5 differs in that the UE 102 and target network 104-2 (target network #1) are unable to complete a TAU process, and thus the UE 102 initiates a second fallback, a CSFB process in this case, to fallback to another target network 104-3 (target network #2)(not shown in FIG. 1). Thus, as with diagram 400, the diagram 500 includes blocks 402 to 412, representing the process of initiating the IMS call with the source network 104-1 via a SIP INVITE message 403, starting the appropriate SIP timers, having the SIP RequestTimeout timer 244-1 expire due to lack of receipt of a reply SIP message or RRC message, determining whether an EPSFB attempt would be suitable and, if so, switching over to the target RAT #1 at block 514 and then restarting the running and expired SIP timers (with offset(s) in some embodiments) at block 516 in response to the aforementioned conditions being met.

However, unlike the scenario of FIG. 4, in the scenario represented in FIG. 5, a TAU process 519 is not completed with the target network 104-2 (target #1), which in turn causes the restarted (and expanded) SIP RequestTimeout timer 244-1 to expire (block 520). This second expiry of the SIP RequestTimeout timer 244-1 signals the UE 102 to end the current dial attempt, and to instead initiate, at block 522 a silent redial of the call over the target #2 RAT (target network 104-3), such as via a CSFB attempt 523 with the 3G RAN represented by target network 104-3. For this attempt, if IMS is available over the target network 104-3, the SIP timer management module 238 restarts all running SIP timers 244 (and the expired SIP RequestTimeout timer 244-1) with offset(s) and proceeds with the CSFB attempt using these restarted (and expanded) timers. However, if IMS is not available over the target network 104-3, then the SIP timer management module 238 stops all running SIP timers and then attempts a silent redial over the circuit-switched network represented by target network 104-3.

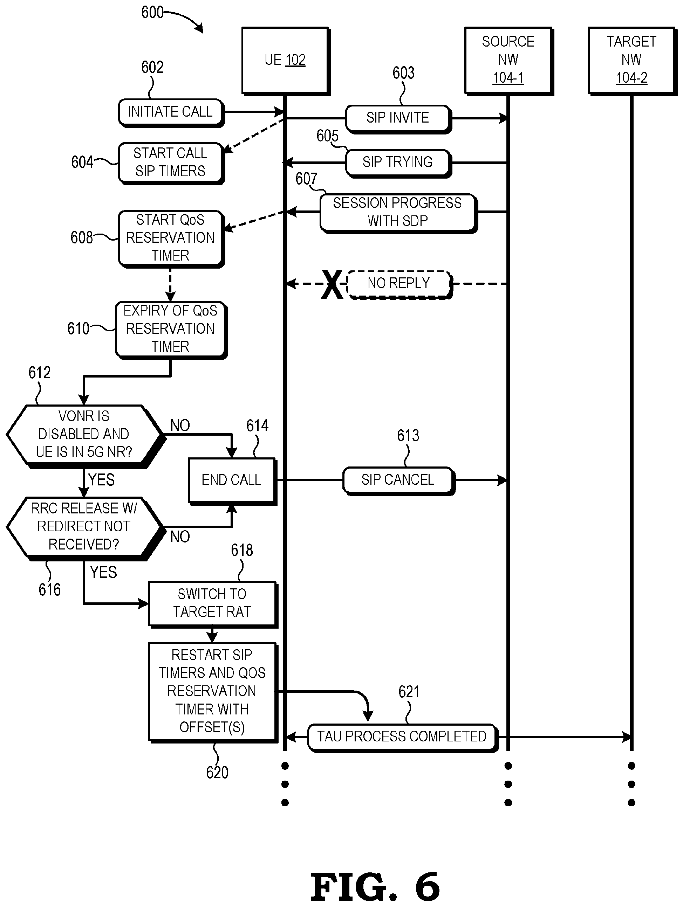

FIG. 6 illustrates a combined method-and-ladder diagram 600 illustrating an operation of the UE 102 in a scenario in which an EPSFB attempt is triggered in response to the failure to receive a dedicated bearer for media related to the IMS call from the source network 104-1. At block 602, the UE 102 initiates an IMS call via 5G NR by transmission of a SIP INVITE message 603 to the source network 104-1. In response to the transmission of the SIP INVITE message 603, the SIP timer management module 238 starts the appropriate SIP timers 244 at block 604. As the source network 104-1 is not configured to support an IMS call over 5G NR (e.g., VoNR) for the UE 102 in this scenario, the source network 104-1 responds to the SIP INVITE message 603 with a SIP TRYING message 605 to indicate an extended search is being performed, which may take considerable time. In response to this SIP TRYING message 605, the SIP timer management module 238 stops the appropriate SIP timers, such as the SIP RequestTimeout timer 244-1 and SIP B timer 244-B.

Further, in this scenario, the source network 104-1 is unable to confirm receipt of the SIP INVITE message at the destination, and thus rather than replying with a SIP 180 RINGING message, the source network 104-1 replies with a SIP 183 PROGRESS message 607 to indicate the call set up remains in progress. Further, the SIP 183 PROGRESS message 607 includes a Session Description Protocol (SDP) field that indicates a precondition that a dedicated bearer is to be set up for the media of the attempted call. The receipt of the SIP 183 PROGRESS message 607 with this SDP precondition triggers the SIP timer management module 238 to start the SIP QoS Reservation timer 244-2 at block 608. However, in this case, an RRC Release with Redirect message is not received from the source network 104-1, which indicates that a dedicated bearer has not been set up for the IMS call, and thus the SIP QoS Reservation timer 244-2 eventually expires at block 610.

The expiry of the SIP QoS Reservation timer 244-2 conventionally would trigger a UE to terminate the attempted call, either via transmission of a SIP CANCEL message or a SIP 680 Preconditions Failure message. However, rather than having the attempted call fail at this point, in at least one embodiment the UE 102 implements a fallback attempt using restarted (and expanded) SIP timers responsive to meeting the condition of the QoS Reservation timer 244-2 expiring. Accordingly, at block 612, the UE 102 determines whether VoNR is disabled or otherwise unavailable to support a packet-switched call via the UE 102 and the US 102 currently is using the 5G NR RAT (e.g., RAT 212-1, FIG. 2). If either of these conditions is false (or "no"), then a UE-initiated fallback attempt is not advisable, and thus the UE 102 defaults to a conventional approach in which the UE 102 terminates the call attempt via transmission of a SIP CANCEL message 613 at block 614.

However, if both conditions are true (or "yes"), then at block 616 the UE 102 confirms that an RRC Release with Redirect message has not been received. If such a message has in fact been received but the SIP RequestTimeout timer 244-1 has expired, then an EPSFB attempt is not advisable and thus the UE 102 defaults to the conventional approach of terminating the attempted call at block 614 via transmission of the SIP CANCEL message 613. Otherwise, if an RRC Release with Redirect message has not been received, then the UE 102 proceeds with a fallback attempt by attempting to camp on the target network 104-2 with IMS. Accordingly, at block 618 the UE 102 switches from the source RAT to the target RAT (e.g., switches from using RAT 212-1 to using RAT 212-2) and at block 620 the UE 102 restarts some or all of the running (or expired) SIP timers, including the expired SIP QoS Reservation timer 244-2, and in some embodiments adds the same or different offset to some or all of the restarted SIP timers. This SIP timer restart (with additional offset) prepares the UE 102 to initiate performance of the sub-processes of the EFSFB process without premature termination by expiry of a SIP timer originally started with the issuance of the SIP INVITE message 603. For example, the UE 102 and target network 104-2 participate in a TAU process 621, which in the illustrated embodiments is successfully completed. The process for attempting to complete the IMS call using the target network 104-2 then may proceed using the standardized process with the remaining restarted and still running SIP timers to control the behavior of the UE 102 in response to corresponding conditions as this process progresses.

The systems and techniques described above further may be better understood by considering the following examples, individually or in combination:

Example 1: A method implemented at a user equipment (UE), the method including: initiating a packet-switched call via a first radio access technology (RAT), starting a plurality of session initiation protocol (SIP) timers responsive to initiating the call, and responsive to at least one condition being present with initiation of a fallback process for the call, restarting a set of the plurality of SIP timers for the fallback process.

Example 2: The method of Example 1, wherein each SIP timer has a corresponding default timer duration, and restarting a SIP timer of the set includes restarting with a starting duration equal to a sum of the default timer duration and an offset.

Example 3: The method of Example 2, wherein the offset is the same for each SIP timer of the set.

Example 4: The method of Example 2, wherein the offset for one SIP timer of the set differs from the offset for another SIP timer of the set.

Example 5: The method of any of Examples 1 to 4, wherein the set is the plurality of SIP timers.

Example 6: The method of any of Examples 1 to 5, wherein the set of one or more SIP timers includes at least one of a SIP RequestTimeout timer or a SIP Quality of Service (QoS) Reservation timer.

Example 7: The method of any of Examples 1 to 6, wherein the first RAT is a Fifth Generation New Radio (5G NR) RAT, and the fallback process is an Evolved Packet System (EPS) Fall Back (EPSFB) process.

Example 8: The method of any of Examples 1 to 7, wherein starting the plurality of SIP timers includes starting the plurality of SIP timers responsive to transmitting a SIP INVITE message by the UE to a first network via the first RAT.

Example 9: The method of Example 8, wherein the at least one condition includes receiving a Release with Redirect message from the first network and a determination that a second network can support the packet-switched call.

Example 10: The method of Example 8, wherein the at least one condition includes failing to receive a Release with Redirect message before expiry of a SIP RequestTimeout timer of the plurality of SIP timers and a determination that the UE is unavailable to support the packet-switched call using the first RAT.

Example 11: The method of Example 8, wherein the at least one condition includes expiry of a SIP Quality of Service (QoS) Reservation timer following a failure to establish a dedicated bearer for the packet-switched call by the first network, a failure to receive a Release and Redirect message from the first network, and a determination that the UE is unavailable to support the packet-switched call using the first RAT.

Example 12: The method of any of Examples 1 to 6, wherein the first RAT is a Fourth Generation Long Term Evolution (4G LTE) RAT, and the fallback process is a Circuit Switched Fall Back (CSFB) process.

Example 13: A user equipment (UE) including: at least one modem, at least one radio frequency (RF) transceiver, and at least one RF antenna array configured to support a plurality of radio access technologies (RATs), at least one processor coupled to the at least one modem, at least one RF transceiver, and the at least one RF antenna array, and at least one memory coupled to the at least one processor, the at least one memory storing one or more sets of executable instructions configured to manipulate one or both of the at least one modem or the at least one processor to perform the method of any of Examples 1 to 12.

Example 14: A non-transitory computer-readable medium storing one or more sets of executable instructions, the one or more sets of executable instructions configured to manipulate at least one processor of a user equipment to perform the method of any of Examples 1 to 12.

Example 15: An electronic device including the non-transitory computer-readable medium of Example 14, and at least one processor to execute the one or more sets of executable instructions.

In some embodiments, certain aspects of the techniques described above may be implemented by one or more processors of a processing system executing software. The software comprises one or more sets of executable instructions stored or otherwise tangibly embodied on a non-transitory computer-readable storage medium. The software can include the instructions and certain data that, when executed by the one or more processors, manipulate the one or more processors to perform one or more aspects of the techniques described above. The non-transitory computer-readable storage medium can include, for example, a magnetic or optical disk storage device, solid state storage devices such as Flash memory, a cache, random access memory (RAM) or other non-volatile memory device or devices, and the like. The executable instructions stored on the non-transitory computer-readable storage medium may be in source code, assembly language code, object code, or other instruction format that is interpreted or otherwise executable by one or more processors.

A computer-readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer-readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

The protection sought herein is as set forth in the claims below.

## Claims

1. A method implemented at a user equipment, UE, (102) the method comprising:
initiating (302) a packet-switched call via a first radio access technology, RAT;
starting (304) a plurality of session initiation protocol, SIP, timers (244) responsive to initiating the call;
the method being **characterized in that** it further comprises: responsive to at least one condition being present with initiation of a fallback process for the call, restarting (312) a set of the plurality of SIP timers (244) for the fallback process.

2. The method of claim 1, wherein:
each SIP timer (244) has a corresponding default timer duration; and
restarting (312) a SIP timer (244) of the set comprises restarting with a starting duration equal to a sum of the default timer duration and an offset.

3. The method of claim 2, wherein the offset is the same for each SIP timer (244) of the set.

4. The method of claim 2, wherein the offset for one SIP timer (244) of the set differs from the offset for another SIP timer (244) of the set.

5. The method of any of claims 1 to 4, wherein the set is the plurality of SIP timers (244).

6. The method of any of claims 1 to 5, wherein the set of one or more SIP timers (244) includes at least one of a SIP RequestTimeout timer (244-1) or a SIP Quality of Service, QoS, Reservation timer (244-2).

7. The method of any of claims 1 to 6, wherein:
the first RAT is a Fifth Generation New Radio, 5G NR, RAT; and
the fallback process is an Evolved Packet System, EPS, Fall Back, EPSFB, process.

8. The method of any of claims 1 to 7, wherein starting (304) the plurality of SIP timers (244) comprises starting the plurality of SIP timers (244) responsive to transmitting a SIP INVITE message by the UE (102) to a first network via the first RAT.

9. The method of claim 8, wherein the at least one condition comprises receiving (307) a Release with Redirect message from the first network and a determination that a second network can support the packet-switched call.

10. The method of claim 8, wherein the at least one condition comprises failing to receive a Release with Redirect message before expiry of a SIP RequestTimeout timer (244-1) of the plurality of SIP timers (244) and a determination that the UE (102) is unavailable to support the packet-switched call using the first RAT.

11. The method of claim 8, wherein the at least one condition comprises expiry of a SIP Quality of Service, QoS, Reservation timer (244-2) following a failure to establish a dedicated bearer for the packet-switched call by the first network, a failure to receive a Release and Redirect message from the first network, and a determination that the UE is unavailable to support the packet-switched call using the first RAT.

12. The method of any of claims 1 to 6, wherein:
the first RAT is a Fourth Generation Long Term Evolution, 4G LTE, RAT; and
the fallback process is a Circuit Switched Fall Back, CSFB, process.

13. A user equipment, UE, (102) comprising:
at least one modem (206), at least one radio frequency, RF, transceiver (208), and at least one RF antenna array (210) configured to support a plurality of radio access technologies, RATs;
at least one processor (202) coupled to the at least one modem, at least one RF transceiver (208), and the at least one RF antenna array (210); and
at least one memory (204) coupled to the at least one processor (202), the at least one memory (204) storing one or more sets of executable instructions configured to manipulate one or both of the at least one modem (206) or the at least one processor to perform the method of any of claims 1 to 12.

14. A non-transitory computer-readable medium storing one or more sets of executable instructions, the one or more sets of executable instructions configured to manipulate at least one processor of a user equipment (102) to perform the method of any of claims 1 to 12.

## Patentansprüche

1. Verfahren, das an einer Benutzerausrüstung, UE, (102) implementiert ist, wobei das Verfahren umfasst:
Initiieren (302) eines paketvermittelten Anrufs über eine erste Funkzugangstechnologie, RAT;
Starten (304) einer Mehrzahl von Sitzungsinitiierungsprotokoll-, SIP-, Timern (244) als Reaktion auf Initiieren des Anrufs;
wobei das Verfahren **dadurch gekennzeichnet ist, dass** es ferner umfasst:
als Reaktion auf mindestens eine Bedingung, die bei Initiierung eines Fallback-Prozesses für den Anruf vorliegt,
Neustarten (312) eines Satzes der Mehrzahl von SIP-Timern (244) für den Fallback-Prozess.

2. Verfahren nach Anspruch 1, wobei:
jeder SIP-Timer (244) eine entsprechende Standardtimerdauer aufweist; und
Neustarten (312) eines SIP-Timers (244) des Satzes Neustarten mit einer Startdauer umfasst, die gleich einer Summe der Standardtimerdauer und eines Offsets ist.

3. Verfahren nach Anspruch 2, wobei der Offset für jeden SIP-Timer (244) des Satzes gleich ist.

4. Verfahren nach Anspruch 2, wobei sich der Offset für einen SIP-Timer (244) des Satzes von dem Offset für einen anderen SIP-Timer (244) des Satzes unterscheidet.

5. Verfahren nach einem der Ansprüche 1 bis 4, wobei der Satz die Mehrzahl von SIP-Timern (244) ist.

6. Verfahren nach einem der Ansprüche 1 bis 5, wobei der Satz von einem oder mehreren SIP-Timern (244) mindestens eines von einem SIP-RequestTimeout-Timer (244-1) oder einem SIP-Quality-of-Service-, QoS-, Reservierungstimer (244-2) beinhaltet.

7. Verfahren nach einem der Ansprüche 1 bis 6, wobei:
die erste RAT eine Fifth Generation New Radio-, 5G NR-, RAT ist; und
der Fallback-Prozess ein Evolved Packet System-, EPS-, Fallback-, EPSFB-, Prozess ist.

8. Verfahren nach einem der Ansprüche 1 bis 7, wobei Starten (304) der Mehrzahl von SIP-Timern (244) Starten der Mehrzahl von SIP-Timern (244) als Reaktion auf Übertragen einer SIP-INVITE-Nachricht durch die UE (102) an ein erstes Netzwerk über die erste RAT umfasst.

9. Verfahren nach Anspruch 8, wobei die mindestens eine Bedingung Empfangen (307) einer Release-with-Redirect-Nachricht von dem ersten Netzwerk und eine Bestimmung, dass ein zweites Netzwerk den paketvermittelten Anruf unterstützen kann, umfasst.

10. Verfahren nach Anspruch 8, wobei die mindestens eine Bedingung ein Fehlschlagen des Empfangens einer Release-with-Redirect-Nachricht vor Ablauf eines SIP-RequestTimeout-Timers (244-1) der Mehrzahl von SIP-Timern (244) und eine Bestimmung, dass die UE (102) nicht verfügbar ist, um den paketvermittelten Anruf unter Verwendung der ersten RAT zu unterstützen, umfasst.

11. Verfahren nach Anspruch 8, wobei die mindestens eine Bedingung Ablauf eines SIP-Quality-of-Service-, QoS-, Reservierungstimers (244-2) nach einem Fehlschlagen des Einrichtens eines dedizierten Trägers für den paketvermittelten Anruf durch das erste Netzwerk, ein Fehlschlagen des Empfangens einer Release-and-Redirect-Nachricht von dem ersten Netzwerk und eine Bestimmung, dass die UE nicht verfügbar ist, um den paketvermittelten Anruf unter Verwendung der ersten RAT zu unterstützen, umfasst.

12. Verfahren nach einem der Ansprüche 1 bis 6, wobei:
die erste RAT eine Fourth Generation Long Term Evolution-, 4G LTE-, RAT ist; und
der Fallback-Prozess ein Circuit Switched Fallback-, CSFB-, Prozess ist.

13. Benutzerausrüstung, UE, (102), umfassend:
mindestens ein Modem (206), mindestens einen Hochfrequenz-, HF-, Transceiver (208) und mindestens ein HF-Antennenarray (210), die konfiguriert sind, eine Mehrzahl von Funkzugangstechnologien, RATs, zu unterstützen;
mindestens einen Prozessor (202), der mit dem mindestens einen Modem, dem mindestens einen HF-Transceiver (208) und dem mindestens einen HF-Antennenarray (210) gekoppelt ist; und
mindestens einen Speicher (204), der mit dem mindestens einen Prozessor (202) gekoppelt ist, wobei der mindestens eine Speicher (204) einen oder mehrere Sätze von ausführbaren Anweisungen speichert, die konfiguriert sind, eines oder beide von dem mindestens einen Modem (206) oder dem mindestens einen Prozessor zu manipulieren, um das Verfahren nach einem der Ansprüche 1 bis 12 durchzuführen.

14. Nichtflüchtiges computerlesbares Medium, das einen oder mehrere Sätze von ausführbaren Anweisungen speichert, wobei der eine oder die mehreren Sätze von ausführbaren Anweisungen konfiguriert sind, mindestens einen Prozessor einer Benutzerausrüstung (102) zu manipulieren, um das Verfahren nach einem der Ansprüche 1 bis 12 durchzuführen.

## Revendications

1. Procédé mis en œuvre au niveau d'un équipement utilisateur, UE, (102) le procédé comprenant :
l'initiation (302) d'un appel à commutation de paquets via une première technologie d'accès radio, RAT ;
le démarrage (304) d'une pluralité de temporisateurs de protocole d'initiation de session, SIP, (244) en réponse à l'initiation de l'appel ;
le procédé étant **caractérisé en ce qu'**il comprend en outre :
en réponse au fait qu'au moins une condition est présente avec l'initiation d'un processus de reprise pour l'appel, le redémarrage (312) d'un ensemble de la pluralité de temporisateurs SIP (244) pour le processus de reprise.

2. Procédé selon la revendication 1, dans lequel :
chaque temporisateur SIP (244) a une durée de temporisation par défaut correspondante ; et
le redémarrage (312) d'un temporisateur SIP (244) de l'ensemble comprend un redémarrage avec une durée de démarrage égale à une somme de la durée de temporisation par défaut et d'un décalage.

3. Procédé selon la revendication 2, dans lequel le décalage est le même pour chaque temporisateur SIP (244) de l'ensemble.

4. Procédé selon la revendication 2, dans lequel le décalage pour un temporisateur SIP (244) de l'ensemble diffère du décalage pour un autre temporisateur SIP (244) de l'ensemble.

5. Procédé selon l'une quelconque des revendications 1 à 4, dans lequel l'ensemble est la pluralité de temporisateurs SIP (244).

6. Procédé selon l'une quelconque des revendications 1 à 5, dans lequel l'ensemble d'un ou de plusieurs temporisateurs SIP (244) comporte au moins l'un d'un temporisateur SIP RequestTimeout (244-1) ou d'un temporisateur SIP de réservation de qualité de service, QoS (244-2).

7. Procédé selon l'une quelconque des revendications 1 à 6, dans lequel :
la première RAT est une RAT de nouvelle radio de cinquième génération, 5G NR ; et
le processus de reprise est un processus de reprise sur système par paquets évolué, EPS, EPSFB.

8. Procédé selon l'une quelconque des revendications 1 à 7, dans lequel le démarrage (304) de la pluralité de temporisateurs SIP (244) comprend le démarrage de la pluralité de temporisateurs SIP (244) en réponse à la transmission d'un message SIP INVITE par l'UE (102) à un premier réseau via la première RAT.

9. Procédé selon la revendication 8, dans lequel l'au moins une condition comprend la réception (307) d'un message de libération avec redirection du premier réseau et la détermination qu'un second réseau peut prendre en charge l'appel à commutation de paquets.

10. Procédé selon la revendication 8, dans lequel l'au moins une condition comprend l'échec de la réception d'un message de libération avec redirection avant l'expiration d'un temporisateur SIP RequestTimeout (244-1) de la pluralité de temporisateurs SIP (244) et la détermination que l'UE (102) n'est pas disponible pour prendre en charge l'appel à commutation de paquets à l'aide de la première RAT.

11. Procédé selon la revendication 8, dans lequel l'au moins une condition comprend l'expiration d'un temporisateur SIP de réservation de qualité de service, QoS, (244-2) à la suite d'un échec d'établissement d'un support dédié pour l'appel à commutation de paquets par le premier réseau, d'un échec de réception d'un message de libération avec redirection du premier réseau et de la détermination que l'UE n'est pas disponible pour prendre en charge l'appel à commutation de paquets à l'aide de la première RAT.

12. Procédé selon l'une quelconque des revendications 1 à 6, dans lequel :
la première RAT est une RAT d'évolution à long terme de quatrième génération, 4G LTE ; et
le processus de reprise est un processus de reprise sur commutation de circuits, CSFB.

13. Équipement utilisateur, UE, (102) comprenant :
au moins un modem (206), au moins un émetteur-récepteur radiofréquence, RF, (208) et au moins un réseau d'antennes RF (210) configuré pour prendre en charge une pluralité de technologies d'accès radio, RAT ;
au moins un processeur (202) couplé à l'au moins un modem, à l'au moins un émetteur-récepteur RF (208) et à l'au moins un réseau d'antennes RF (210) ; et
au moins une mémoire (204) couplée à l'au moins un processeur (202), l'au moins une mémoire (204) stockant un ou plusieurs ensembles d'instructions exécutables configurées pour manipuler l'un ou les deux de l'au moins un modem (206) ou l'au moins un processeur afin de réaliser le procédé selon l'une quelconque des revendications 1 à 12.

14. Support non transitoire lisible par ordinateur stockant un ou plusieurs ensembles d'instructions exécutables, les un ou plusieurs ensembles d'instructions exécutables étant configurés pour manipuler au moins un processeur d'un équipement utilisateur (102) afin de réaliser le procédé selon l'une quelconque des revendications 1 à 12.
